**Europäisches Patentamt**

**European Patent Office**

**Office européen des brevets**

(19)

(11) Veröffentlichungsnummer: **0 135 055**

**B1**

(12) # EUROPÄISCHE PATENTSCHRIFT

(45) Veröffentlichungstag der Patentschrift:
22.07.87

(51) Int. Cl.⁴: **H 02 K 41/03,** H 02 K 37/12

(21) Anmeldenummer: **84108685.3**

(22) Anmeldetag: **23.07.84**

(54) **Schrittweise arbeitende Antriebsanordnung.**

(30) Priorität: **04.08.83 DE 3328221**

(43) Veröffentlichungstag der Anmeldung:
**27.03.85 Patentblatt 85/13**

(45) Bekanntmachung des Hinweises auf die Patenterteilung:
**22.07.87 Patentblatt 87/30**

(84) Benannte Vertragsstaaten:
**DE FR IT SE**

(56) Entgegenhaltungen:
**DE-A-2 208 854**
**FR-A-1 325 465**
**FR-A-2 454 214**
**FR-E-92 837**
**US-A-3 403 272**
**US-A-3 739 206**

(73) Patentinhaber: **Siemens Aktiengesellschaft Berlin und München, Wittelsbacherplatz 2, D-8000 München 2 (DE)**

(72) Erfinder: **Reichert, Gerhard, Saaleblick 31, D-8740 Salz (DE)**

EP 0 135 055 B1

**Beschreibung**

Die Erfindung betrifft eine schrittweise arbeitende Antriebsanordnung nach dem Oberbegriff des Patentanspruches 1.

Eine solche Antriebsanordnung ist durch die FR-A- 2 454 214 und die DE-A- 2 906 335 bekannt. Bei der Anordnung gemäß DE-A- 2 906 335 sind die Dauermagnete direkt aneinandergrenzend auf einem Antriebsteil angeordnet und der Mittenabstand der Pole entspricht dem 2,5 fachen des Mittenabstandes zwischen zwei Dauermagneten. Um eine Bewegung des Antriebsteiles zu erreichen, werden die Pole impulsweise erregt. Ein Antrieb des Antriebsteiles in einer Richtung wird dadurch erreicht, daß zunächst derjenige Pol erregt wird, unter dem zwei Dauermagnete je zur Hälfte stehen. Infolge der Erregung dieses Poles wird der Antriebsteil um die halbe Breite der Dauermagnete weitergeschaltet. Dabei wird der Antriebsteil je nach der Polarität des Poles in der einen oder in der anderen Richtung weitergeschaltet. Soll die Bewegung in der gleichen Richtung fortgesetzt werden, muß der andere Pol nunmehr mit umgekehrter Polarität gegenüber dem zuerst erregten Pol erregt werden. Danach wird wieder der vorhergehende Pol erregt, jedoch mit der entgegengesetzten Polarität wie beim ersten Schritt. Dann folgt wieder eine Erregung des anderen Poles ebenfalls mit einer Polaritätsumkehr gegenüber der vorhergehenden Erregung. Um den Antriebsteil jeweils in der gewünschten Richtung anzutreiben, ist somit eine Steuerlogik erforderlich, die in Abhängigkeit von einem die jeweilige Stellung des Antriebsteiles erfassenden Fühler den entsprechenden Pol mit der entsprechenden Polarität an die Versorgungsquelle schaltet.

Der Erfindung liegt die Aufgabe zugrunde, eine Antriebsanordnung der eingangs beschriebenen Art so auszubilden, daß die Fortschaltung des Antriebsteiles in der einen oder anderen Richtung jeweils nur durch aufeinanderfolgende impulsweise Erregung eines der Pole erfolgen kann.

Die Lösung der gestellten Aufgabe gelingt nach der Erfindung dadurch, daß die Dauermagnete mit einem Abstand zueinander angeordnet sind, der größer als die halbe Breite der Dauermagneten ist und der Mittenabstand der Pole kleiner als das 1,5-fache des Mittenabstandes der Dauermagnete ist, daß ferner den beiden Polen eine zu diesen symmetrisch angeordnete Rückschlußplatte zugeordnet ist, deren Breite in Bewegungsrichtung des Antriebsteiles größer als der Mittenabstand der beiden Pole plus der Breite eines Poles ist. Infolge dieses Aufbaus der Antriebsanordnung wird der Antriebsteil bei Erregung des einen Poles in der einen und ggf. bei Erregung des anderen Poles in der anderen Richtung weitergeschaltet. Soll der Antriebsteil in mehreren Schritten in der gleichen Richtung weitergeschaltet werden, so muß der betreffende Pol lediglich mit Impulsen wechselnder Polarität beaufschlagt werden. Eine Lageerfassung des Antriebsteiles ist nicht notwendig, da bei einer Aufschaltung eines Impulses mit falscher Polarität der Antriebsteil in seiner Stellung verbleibt und erst bei dem folgenden Impuls mit der anderen Polarität einen Bewegungsschritt ausführt. Damit ist für die beschriebene Antriebsanordnung keine aufwendige Steuerlogik notwendig. Für das Steuern der Anordnung genügt beispielsweise ein einfacher Umschalter, mit dem die Polarität der Versorgungsspannung umgeschaltet werden kann. Bei der Anordnung gemäß FR-A- 2.454.214 ist es an sich bekannt, den Polen eine Rückschlußplatte zuzuordnen.

Optimale Werte hinsichtlich der Anzugs-, Schub- und Haltekräfte lassen sich nach einer Ausgestaltung der Erfindung dadurch erreichen, daß der Mittenabstand der Pole gleich dem 1,2- bis 1,3-fachen des Mittenabstandes der Dauermagnete, der Abstand zwischen den Dauermagneten gleich den 0,8- bis 1,6-fachen der Breite der Dauermagnete, die Breite der Dauermagnete gleich der Breite der Pole und die Breite der Rückschlußplatte gleich dem doppelten Mittenabstand der Dauermagnete ist.

Bei größeren Abständen zwischen den Dauermagneten, insbesondere bei Abständen die größer als die Breite der Dauermagneten sind, wird eine ausreichende Anzugskraft dadurch erreicht, daß zu beiden Seiten der Rückschlußplatte gegenüber deren den Polen zugewandten Ebene zurückgesetzte Anlaufkanten vorgesehen sind.

Der Antriebsteil selbst kann als geradlinige Schiene oder auch als Kreis- bzw. Sektorscheibe ausgebildet sein. Bei einer Anordnung mit einer Kreis- bzw. Sektorscheibe als Antriebsteil ist es zur Verbesserung des Laufes vorteilhaft, wenn der Abstand zwischen den Dauermagneten an ihren radial innenliegenden Enden größer als der Luftspalt zwischen den Polen und der Rückschlußplatte ist.

Desgleichen werden bei einer solchen Anordnung sehr hohe Schubkräfte erzielt, wenn der Abstand zwischen den Dauermagneten über ihre volle radiale Erstreckung gleich der Breite der Dauermagnete an der betreffenden Stelle ist.

Anhand eines in der Zeichnung dargestellten Ausführungsbeispieles wird die Erfindung nachfolgend näher erläutert. Es zeigt

FIG 1 eine schematische Darstellung einer Antriebsanordnung mit einem linearen Antriebsteil.

FIG 2 eine konstruktive Ausführungsform einer Antriebsanordnung mit einem linearen Antriebsteil in Seitenansicht.

FIG 3 eine Draufsicht der Anordnung nach FIG 2.

FIG 4 die Anordnung nach FIG 2 im Schnitt entlang der Linie IV-IV.

FIG 5 eine konstruktive Ausführungsform einer Antriebsanordnung mit einer Kreis- bzw.

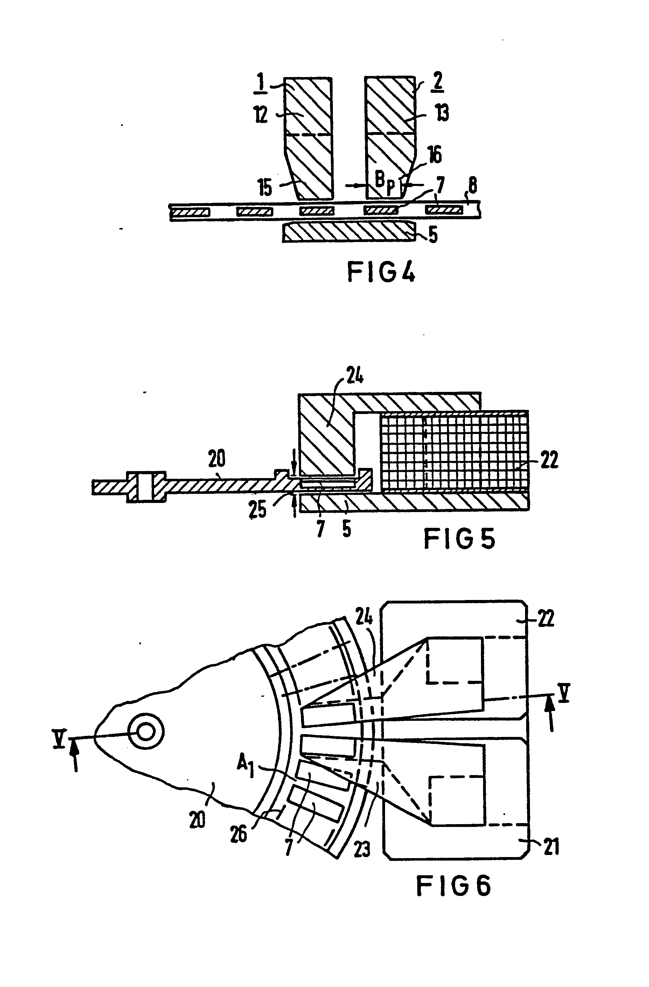

Sektorscheibe als Antriebsteil im Schnitt entlang der Linie V-V in FIG 6.

FIG 6 eine Draufsicht der Anordnung nach FIG 5 und

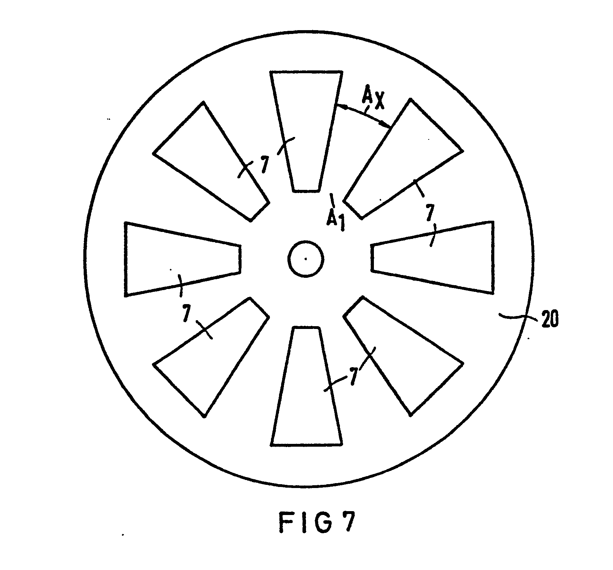

FIG 7 eine Kreisscheibe mit trapezförmig ausgebildeten Dauermagneten.

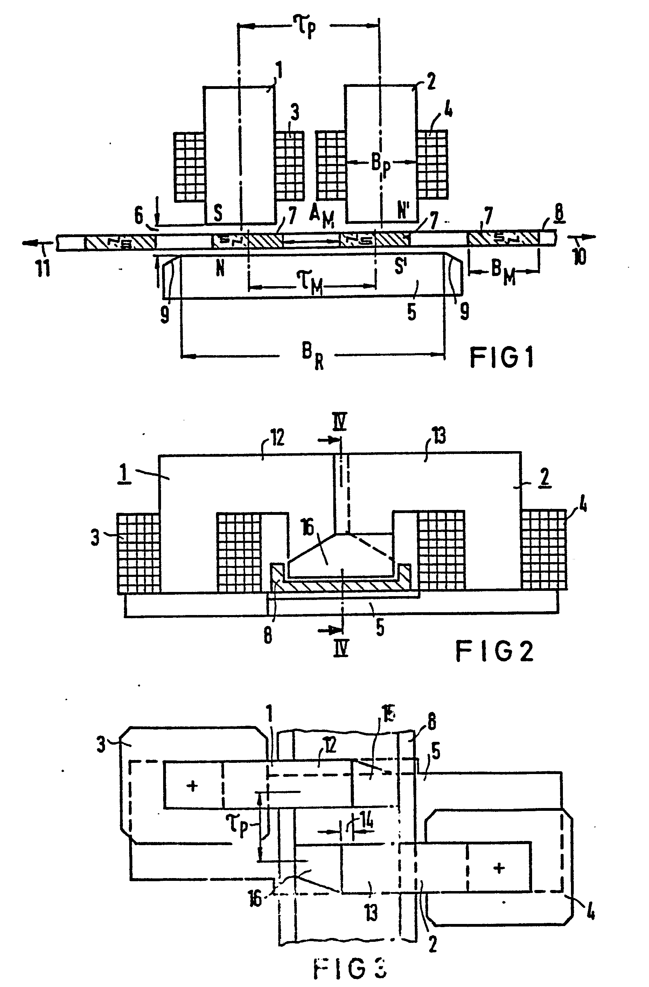

Mit 1 und 2 sind in FIG 1 zwei mittels Erregerspulen 3 und 4 elektrisch erregbare Pole bezeichnet. Diesen beiden Polen 1 und 2 ist eine sich unter denselben erstreckende, gemeinsame Rückschlußplatte 5 zugeordnet. In dem zwischen den Polen 1 und 2 und der Rückschlußplatte 5 bestehenden Luftspalt 6 ist eine geradlinige mit Dauermagneten 7 bestückte Schiene 8 als Antriebsteil angeordnet. Die Dauermagnete 7 sind auf der Schiene 8 mit wechselnder Polarität und mit einem Abstand $A_M$ voneinander angeordnet.

Der Mittenabstand $\tau_P$ der beiden Pole 1 und 2 ist größer als der Mittenabstand $\tau_M$ zweier aufeinanderfolgender Dauermagnete 7. Der Mittenabstand $\tau_P$ darf jedoch nicht gleich oder größer als das 1,5-fache des Mittenabstandes $\tau_M$ der Dauermagnete 7 sein. Mit $B_p$ ist die Breite der Pole 1 und 2, mit $B_M$ die Breite der Dauermagnete 7 und mit $B_R$ die Breite der Rückschlußplatte 5 bezeichnet. Die Breite $B_R$ der Rückschlußplatte 5 darf nicht kleiner als der Mittenabstand $\tau_P$ der Pole 1 und 2 plus der Breite $B_P$ eines Poles sein. Eine dem doppelten Mittenabstand $\tau_M$ der Dauermagnete 7 entsprechende Breite $B_R$ der Rückschlußplatte 5 trägt wesentlich zur Optimierung der Antriebskräfte der Anordnung bei.

Es hat sich ferner gezeigt, daß es vorteilhaft ist, bei einem größeren Abstand $A_M$ zwischen den Dauermagneten 7, vor allem wenn dieser Abstand $A_M$ größer als die Breite $B_M$ der Dauermagnete 7 ist, an der Rückschlußplatte 5 Anlaufkanten 9 vorzusehen. Diese Anlaufkanten 9 können, wie in der FIG 1 dargestellt, als abgeschrägte Kanten oder auch als stufenförmig abgesetzte Kanten ausgebildet sein.

Diese zu den außerhalb der Pole 1 und 2 liegenden Dauermagneten 7 hinragenden Anlaufkanten verkürzen den Weg für die von dem betreffenden Dauermagneten ausgehenden magnetischen Kraftlinien, wodurch die auf das Antriebsteil wirkende Anzugskraft erhöht wird.

Die Anordnung arbeitet wie folgt: Wird z. B. die Erregerspule 3 kurzzeitig an Spannung gelegt, so daß der Pol 1, wie in der FIG 1 angedeutet, als Südpol S erregt wird, dann erfolgt bei der dargestellten Polarität des unter dem Pol 1 stehenden Dauermagneten 7 (Südpol dieses Dauermagneten 7 dem Pol 1 zugekehrt) eine Abstoßung in der durch einen Pfeil 10 angedeuteten Richtung. Die Schiene 8 wird um den Mittenabstand $\tau_M$ in Richtung des Pfeiles 10 bewegt. Daraufhin gelangt der nächste Dauermagnet 7 unter den Pol 1. Da die Polarität dieses Dauermagneten 7 gegenüber dem Vorhergehenden umgekehrt ist, erfolgt eine Anziehung dieses Dauermagneten 7 durch den Südpol S des Poles 1. Dieser Dauermagnet 7 bleibt daher unter dem Südpol S stehen und die Bewegung der Schiene 8 ist beendet.

Erfolgt nunmehr eine erneute Erregung des Poles 1 mit umgekehrter Polarität, so wirkt dieser jetzt als Nordpol. Da der nunmehr unter dem Pol 1 stehende Dauermagnet 7 mit seinem Nordpol dem Pol 1 zugewandt ist, erfolgt wiederum eine Abstoßung, so daß die Schiene 8 in Richtung des Pfeiles 10 weiterbewegt wird, bis der nächste Dauermagnet 7 unter den Pol 1 gelangt. Da dieser nächste Dauermagnet 7 mit seinem Südpol zu dem Pol 1 weist, erfolgt eine Anziehung zwischen dem Nordpol des Poles 1 und dem Südpol des Dauermagneten 7. Der Dauermagnet 7 bleibt somit wiederum unter dem Pol 1 stehen.

Die Erläuterungen zeigen, daß durch eine Erregung des Poles 1 mit abwechselnder Polarität die Schiene 8 stets in der Richtung des Pfeiles 10 weiterbewegt wird. Um die Fortschaltung der Schiene 8 in der gewünschten Richtung zu erreichen, ist somit weder eine aufwendige Logikschaltung, noch eine Lageerfassung der Schiene 8 notwendig. Für eine Fortschaltung in einer Richtung kommt es auch nicht darauf an, daß der betreffende Pol gleich beim ersten Impuls mit der richtigen Polarität erregt wird. Wird nämlich der Pol 1 in der in FIG 1 dargestellten Stellung der Schiene 8 beim ersten Erregungsimpuls nicht wie geschildert als Südpol S erregt, sondern als Nordpol, dann erfolgt eine Anziehung zwischen dem Nordpol des Poles 1 und dem Südpol des unter ihm stehenden Dauermagneten 7. Dies hat zur Folge, daß die Schiene 8 in ihrer Lage verbleibt. Nur für den Fall, daß infolge von mechanischen Ungenauigkeiten kein exaktes Kräftegleichgewicht aller in dem System wirkende Magnetkräfte gegeben ist, erfolgt eine geringfügige Bewegung der Schiene 8 entgegen der Richtung des Pfeiles 10. Dabei kann die Schiene 8 im äußersten Falle nur soweit bewegt werden, bis der Dauermagnet 7 mittig unter dem Pol 1 steht. Wird der Pol 1 beim nächsten Erregungsimpuls dann als Südpol erregt, erfolgt der Antrieb der Schiene 8 in der zuvor beschriebenen Weise.

Der Antrieb der Schiene 8 in der durch einen Pfeil 11 gekennzeichneten anderen Richtung erfolgt durch Erregung des anderen Poles 2. Wird die Erregerspule kurzzeitig an Spannung gelegt, so daß der Pol 2 als Nordpol N' erregt wird, dann erfolgt zwischen dem Nordpol N' des Poles 2 und dem entsprechend der Darstellung in FIG 1 mit seinem Nordpol unter dem Pol 2 stehenden Dauermagneten 7 eine Abstoßung in Richtung des Pfeiles 11. Die Schiene 8 wird dabei solange bewegt, bis der nachfolgende Dauermagnet 7 unter den Pol 2 gelangt. Da dieser Dauermagnet mit seinem Südpol zum Nordpol N' des Poles 2 weist, erfolgt eine Anziehung und der Dauermagnet 7 bleibt unter dem Pol 2 stehen. Durch aufeinanderfolgenden Polaritätswechsel des Poles 2 kann die Schiene 8 dann Schritt um Schritt in Richtung des Pfeiles 11 weitergeschaltet werden. Erfolgt eine "falsche" Erregung des Poles 2, z. B. in der dargestellten Stellung der Schiene 8 statt als Nordpol N' als Südpol, so erfolgt kein Antrieb der Schiene 8 in Richtung des Pfeiles. Ein Antrieb der Schiene 8 erfolgt immer nur dann, wenn der betreffende Pol 1 bzw. 2 gegenüber dem unter ihm stehenden Dauermagneten gleichnamig erregt ist.

Um die Schiene 8 in der jeweils erreichten Stellung zu halten, bedarf es keines Haltestromes in den Erregerspulen 3 und 4. Durch die Kräfte der Dauermagnete 7 wird die Schiene 8 in der jeweils erreichten Stellung gehalten, da sich der magnetische Fluß zwischen den beiden unter den Polen 1 und 2 stehenden Dauermagneten 7 über diese Pole 1 und 2 und die Rückschlußplatte 5 schließt.

Durch entsprechende Bemessung der Breite $B_M$ der Dauermagnete 7, der Breite $B_P$ der Pole 1 und 2, der Breite $B_R$ der Rückschlußplatte 5 sowie des Abstandes $A_M$ zwischen den Dauermagneten 7, des Verhältnisses der Mittenabstände $\tau_P$ zu $\tau_M$ und schließlich des Gesamtluftspaltes 6 zwischen den Polen 1 und 2 und der Rückschlußplatte 5 kann die Anordnung im Hinblick auf die Anzugs-, Schub- und Haltekräfte entsprechend optimiert werden.

Eine aufwendige Steuerlogik sowie gesonderte Elemente zur Lageerfassung des Antriebsteiles sind bei der beschriebenen Antriebsanordnung nicht notwendig, da die Bewegung des Antriebsteiles in der einen oder anderen Richtung jeweils durch Erregung des einen oder anderen Poles 1 bzw. 2 erfolgt und eine Erregung mit "falscher" Polarität keine Bewegung des Antriebsteiles zur Folge hat.

Es besteht ferner die Möglichkeit, die Antriebsanordnung mit einer getakteten Spannung wechselnder Polarität zu betreiben. Dabei wird die getaktete Spannung jeweils mittels eines Tasters an den einen oder anderen Pol 1 bzw. 2 gelegt. Der Antriebsteil wird daraufhin mit der Geschwindigkeit der Taktfolge in der einen oder anderen Richtung weitergeschaltet. Die Bewegung des Antriebsteiles setzt erst dann ein, wenn ein Spannungsimpuls mit der "richtigen" Polarität eintrifft.

Bei der in Fig 2 dargestellten Antriebsanordnung sind die Erregerspulen 3 und 4 zu beiden Seiten der Schiene 8 angeordnet. Da die beiden Pole 1 und 2 nicht mit beliebigem Abstand zueinander angeordnet werden können, steht bei einer solchen Anordnung der Erregerspulen 3 und 4 mehr Raum für diese zur Verfügung. Um den Streufluß zwischen den Schenkeln 12 und 13 der Pole 1 und 2 möglichst klein zu halten, überlappen sich diese nur um eine geringfügige Strecke 14 (Fig 3). Über der Schiene 8 sind Polschuhe 15 und 16 an den Schenkeln 12 und 13 angeordnet. Lediglich diese Polschuhe liegen auf ihrer vollen Länge parallel nebeneinander. Um weiterhin die magnetischen Verluste im Eisen gering zu halten, weisen die Schenkel 12 und 13 eine größere Breite auf als die Polschuhe 15 und 16, deren Breite $B_P$ die bestimmende Polbreite darstellt (Fig 4).

Die Figuren 5 und 6 zeigen eine Antriebsanordnung, bei der der Antriebsteil als Kreis- oder Sektorscheibe 20 ausgeführt ist. Am Umfang der Kreis- bzw. Sektorscheibe 20 ist ein Polsystem angeordnet, das aus elektrischen Erregerspulen 21 und 22 und den von diesen erregten Polen 23 und 24 sowie einer den beiden Polen 23 und 24 zugeordneten gemeinsamen Rückschlußplatte 5 besteht. In dem Luftspalt 25 zwischen den Polen 23 und 24 und der Rückschlußplatte 5 befinden sich die auf der Kreis- bzw. Sektorscheibe 20 angeordneten Dauermagnete 7. Bei der Anordnung der Dauermagnete 7 auf der Kreis- oder Sektorscheibe 20 ist es wichtig, daß der Abstand $A_1$ zwischen den Dauermagneten 7 am Innenkreis 26, d.h. zwischen den innenliegenden Enden der Dauermagnete 7 größer ist als der Luftspalt 25 zwischen den Polen 23 und 24 und der Rückschlußplatte 5. Die Pole 23 und 24 müssen entsprechend der Anordnung der Dauermagnete 7 und der Bedingung $\tau_P$ größer als $\tau_M$ angeordnet werden.

Als vorteilhaft hat es sich erwiesen, wenn die auf der Kreis- oder Sektorscheibe 20 angeordneten Dauermagneten 7 trapezförmig ausgebildet sind. Die Trapezform ist so gewählt, daß der Abstand $A_x$ zwischen den einzelnen Dauermagneten 7 über die volle radiale Erstreckung derselben gleich der Breite der Dauermagnete an der betreffenden Stelle ist, wobei am innenliegenden Ende der Dauermagnete 7 der Abstand $A_1$ wiederum größer als der Luftspalt 25 sein sollte.

In Anwendungsfällen bei denen ein Atrieb immer nur in einer Richtung notwendig ist, reicht es aus, wenn nur einer der beiden Pole 23 oder 24 mit einer Erregerspule 21 bzw. 22 versehen ist. Hierdurch ergibt sich eine wesentliche Materialeinsparung. Der zweite Pol selbst muß jedoch erhalten bleiben.

Ferner ist es auch möglich die Erregerpolpaare mehrfach anzuordnen, wodurch die Antriebskräfte entsprechend erhöht werden. Dabei ist zu beachten, daß zwischen zwei benachbarten Erregerpolpaaren mindestens ein Dauermagnet 7 ohne Polbedeckung stehen muß.

Mit der Schiene 8 bzw. der Kreis- oder Sektorscheibe 20 können zu verstellende Elemente, beispielsweise Luftklappen oder elektrische Stellglieder gekoppelt werden. Da durch die Dauermagnete 7 eine Selbsthaltung in der jeweils erreichten Stellung erfolgt, eignet sich die Antriebsanordnung vor allem für einen Einsatz in Anlagen, in denen im Ruhezustand keine Energie oder nur in begrenztem Umfang zur Verfügung steht. Wird die Antriebsanordnung zur Betätigung von Luftklappen im Auto angesetzt, so erfolgt während des Stillstandes keine Belastung der Autobatterie durch die Antriebsanordnung. Außerdem ist eine Handverstellung durch Überwinden der Stillstandshältekräfte möglich, damit bleibt die Betriebsbereitschaft eines Fahrzeuges auch bei einer Störung erhalten.

## Patentansprüche

1. Schrittweise arbeitende Antriebsordnung, die mindestens ein Paar von zwei mittels einer Schalteinrichtung an eine Versorgungsquelle enschaltbare, elektrisch erregbaren Polen (1, 2) gleicher Breite und einen Antriebsteil (8) aufweist, an dem Dauermagnete (7) gleicher Größe mit abwechselnder Polarität angeordnet sind, bei welcher Anordnung ferner der Mittenabstand zwischen den beiden Polen größer ist als der Mittenebstand von zwei benachbarten Dauermagneten, dadurch gekennzeichnet, daß die Dauermagnete (7) mit einem Abstand ($A_M$) zueinander engeordnet sind, der größer als die halbe Breite ($B_M$) der Dauermagnete (7) ist und der Mittenabstand ($\tau_p$) der Pole (1 und 2) kleiner als das 1,5-fache des Mittenabstandes ($\tau_M$) der Dauermagnete (7) ist, daß ferner den beiden Polen (1 und 2) eine zu diesen symmetrisch angeordnete Rückschlußplatte (5) zugeordnet ist, deren Breite ($B_R$) in Bewegungsrichtung des Antriebsteiles (8 bzw. 20) größer als der Mittenabstand ($\tau_P$) der beiden Pole (1 und 2) plus der Breite ($B_p$) eines Poles (1 bzw. 2) ist und die Portschaltung des Antriebsteiles (8 bzw. 20) in der einen Richtung nur durch aufeinanderfolgende impulsweise Erregung eines Poles (1 oder 2) erfolgt und ggf. in der anderen Richtung durch das Einschalten des anderen Poles (1 oder 2).

2. Antriebsanordnung nach Anspruch 1, dadurch gegennzeichnet, daß der Mittenabstand ($\tau_p$) der Pole (1 und 2) gleich dem 1,2- bis 1,3-fachen des Mittenabstandes ($\tau_M$) der Dauermagnete (7), der Abstand ($A_M$) zwischen den Dauermagneten (7) gleich dem 0,8- bis 1,6-fachen der Breite ($B_M$) der Dauermagnete (7), die Breite ($B_M$) der Dauermagnente (7) gleich der Breite ($B_P$) der Pole (1 und 2) und die Breite ($B_R$) der Rückschlußplatte (5) gleich dem doppelten Mittenabstand ($\tau_M$) der Dauermagnete (7) ist.

3. Antriebsanordnung nach Anspruch 1 oder 2, dadurch gekennzeichnet, daß zu beiden Seiten der Rückschlußplatte (5) gegenüber deren den Polen (1 und 2) zugewandten Ebene zurückgesetzte Anlaufkanten (9) vorgesehen sind.

4. Antriebsanordnung nach Anspruch 1, 2 oder 3, dadurch gekennzeichnet, daß die Dauermagnete (7) auf einer geradlinigen Schiene (8) aus amagnetischem Werkstoff angeordnet sind.

5. Antriebsanordnung nach Anspruch 1, 2 oder 3, dadurch gekennzeichnet, daß die Dauermagnete (7) auf einer drehbar gelagerten Kreis- oder Sektorscheibe (20) angeordnet sind.

6. Antriebsanordnung nach Anspruch 5, dadurch gekennzeichnet, daß der Abstand ($A_1$) zwischenden Dauermagneten (7) an ihren radial innenliegenden Enden größer als der Luftspalt (25) zwischen den Polen (23 und 24) und der Rückschlußplatte (5) ist.

7. Antriebsanordnung nach Anspruch 6, dadurch gekennzeichnet, daß der Abstand ($A_x$) zwischen den Dauermagneten (7) über ihre volle radiale Erstreckung gleich der Breite ($B_{Mx}$) der Dauermagnete (7) an der betreffenden Stelle ist.

8. Antriebsanordnung nach Anspruch 5, 6 oder 7, dadurch gekennzeichnet, daß nur einer der beiden Pole (23 der 24) mit einer Erregerspule (21 bzw. 22) versehen ist.

9. Antriebsanordnung nach einem oder mehreren der vorhergehenden Ansprüche dadurch gekennzeichnet, daß mehrere Polpaare (1, 2 bzw. 23, 24) vorgesehen sind, wobei der Abstand zwischen zwei benachbarten Polpaaren mindestens so groß sein muß, daß mindestens ein Dauermagnet (7) zwischen den betreffenden Polpaaren von keinem Pol (1 oder 2, bzw. 23 oder 24) bedeckt ist.

## Claims

1. A drive arrangement which operates stepwise and includes at least one pair of two electrically-excitable poles (1, 2) of equal width which can be connected to a supply source by a switching device, and a drive component (8) on which are arranged permanent magnets (7) of equal size and alternate polarity, in which arrangement the mean distance between the two poles is greater than the mean distance between two adjacent permanent magnets, characterised in that the permanent magnets (7) are spaced at a distance ($A_M$) relative to one another, which is greater than half the length ($B_M$) of the permanent magnets (7), and the mean distance ($\tau_p$) between the poles (1 and 2) is less than 1.5 times the mean distance ($\tau_M$) between the permanent magnets (7), that moreover the two poles (1 and 2) are assigned a short-circuit plate (5) arranged symmetrically in relation to said poles and whose length ($B_R$) in the direction of motion of the drive component (8, 20) is greater than the mean distance ($\tau_p$) between the two poles (1 and 2) plus the length ($B_p$) of one pole (1 or 2), and where the drive component (8, 20) is stepped on in one direction only by successive, pulse-wise excitation of one pole (1 or 2), and in the other direction when required by connecting the other pole (1 or 2).

2. A drive arrangement as claimed in Claim 1, characterised in that the mean distance ($\tau_p$) between the poles (1 and 2) is equal to 1.2 to 1.3 times the mean distance ($\tau_M$) between the permanent magnets (7), the distance ($A_M$) between the permanent magnets (7) is equal to 0.8 to 1.6 times the length ($B_M$) of the permanent magnets (7), the length ($B_M$) of the permanent magnets (7) is equal to the length ($B_p$) of the poles (1 and 2) and the length ($B_R$) of the short-circuit plate (5) is equal to double the mean distance ($\tau_M$) between the permanent magnets (7).

3. A drive arrangement as claimed in Claim 1 or 2, characterised in that chamfered edges (9) are provided on both sides of the short-circuit plate (5), extending back from its plane facing towards the poles (1 and 2).

4. A drive arrangement as claimed in Claim 1, 2 or 3, characterised in that the permanent magnets (7) are arranged on a rectilinear rail (8) of non-magnetic material.

5. A drive arrangement as claimed in Claim 1, 2 or 3, characterised in that the permanent magnets (7) are arranged on a rotatably mounted circular or sectored disc (20).

6. A drive arrangement as claimed in Claim 5, characterised in that the distance ($A_a$) between the permanent magnets (7) at their radially inner ends is greater than the air gap (25) between the poles (23 and 24) and the short-circuit plate (5).

7. A drive arrangement as claimed in Claim 6, characterised in that the distance ($A_x$) between the permanent magnets (7) along the whole of their radial extent is equal to the length ($B_{Mx}$) of the permanent magnets (7) at the respective point.

8. A drive arrangement as claimed in Claim 5, 6 or 7, characterised in that only one of the two poles (23 or 24) is provided with an exciter coil (21 or 22 as the case may be).

9. A drive arrangement as claimed in one or more of the preceding Claims, characterised in that a plurality of pairs of poles (1, 2 and 23, 24) are provided, and the distance between two adjacent pairs of poles is at least such that there is at least one permanent magnet (7) between the respective pairs of poles which is not covered by a pole (1 or 2, 23 or 24).


## Revendications

1. Dispositif d'entraînement fonctionnant pas à pas, qui présente au moins une paire de deux pôles (1, 2) d'égale largeur, pouvant être excités électriquement et pouvant être connectés par un dispositif de commutation à une source d'alimentation, ainsi qu'une partie d'entraînement (8) sur laquelle des aimant permanents (7) d'égale grandeur sont disposés avec polarité alternée, dispositif d'entraînement dans lequel, en outre, l'entr'axe des deux pôles est plus grand que l'entr'axe de deux aimants permanents voisins, caractérisé en ce que les aimants permanents (7) sont disposés avec un espacement mutuel ($A_M$) plus grand que la moitié de la largeur ($B_M$) des aimants permanents (7) et l'entr'axe ($\tau_p$) des pôles (1 et 2) est plus petit que 1,5 fois l'entr'axe ($\tau_M$) des aimants permanents (7), qu'une plaque de fermeture du flux (5) est associée, en outre, aux deux pôles (1 et 2) et est disposée symétriquement par rapport à ceux-ci, plaque dont la largeur ($B_R$) dans la direction de mouvement de la partie d'entraînement (8 respectivement 20) est plus grande que l'entr'axe ($\tau_p$) des deux pôles (1 et 2) plus la largeur ($B_p$) d'un pôle (1 ou 2), et que l'avancement de la partie d'entraînement (8 respectivement 20) dans un sens s'effectue seulement par l'excitation successive, par impulsions, d'un pôle (1 ou 2), l'avancement éventuel dans l'autre sens s'effectuant par la mise en circuit de l'autre pôle (1 ou 2).

2. Dispositif selon la revendication 1, caractérisé en ce que l'entr'axe ($\tau_p$) des pôles (1 et 2) est égal à 1,2 à 1,3 fois l'entr'axe ($\tau_M$) des aimants permanents (7), l'espacement ($A_M$) des aimants permanents (7) est égal à 0,8 à 1,6 fois la largeur ($B_M$) des aimants permanents (7), la largeur ($B_M$) des aimants permanents (7) est égale à la largeur ($B_P$) des pôles (1 et 2) et la largeur ($B_R$) de la plaque de fermeture du flux (5) est égale au double de l'entr'axe ($\tau_M$) des aimants permanents (7).

3. Dispositif selon la revendication 1 ou 2, caractérisé en ce que la plaque de fermeture du flux (5) présente, sur les deux côtés, des arêtes d'accélération (9) disposées en retrait par rapport au plan de cette plaque dirigée vers les pôles (1 et 2).

4. Dispositif selon la revendication 1, 2 ou 3, caractérisé en ce que les aimants permanents (7) sont disposés sur une barre droite (8) en matériau amagnétique.

5. Dispositif selon la revendication 1, 2 ou 3, caractérisé en ce que les aimants permanents (7) sont disposés sur un disque circulaire ou en forme de secteur (20) qui est monté rotatif.

6. Dispositif selon la revendication 5, caractérisé en ce que l'espacement ($A_1$) des aimants permanents (7) à leurs extrémités intérieures est plus grand que l'entrefer (25) entre les pôles (23, 24) et la plaque de fermeture du flux (5).

7. Dispositif selon la revendication 6, caractérisé en ce que l'espacement ($A_x$) des aimants permanents (7) est égal, sur toute l'étendue radiale des aimants, à la largeur ($B_{MX}$) des aimants permanents (7) à l'endroit considéré.

8. Dispositif selon la revendication 5, 6 ou 7, caractérisé en ce que seulement l'un des deux pôles (23 ou 24) est muni d'une bobine excitatrice (21 respectivement 22).

9. Dispositif selon l'un ou plusieurs des revendications précédentes, caractérisé en ce qu'il comprend plusieurs paires de pôles (1, 2, respectivement 23, 24), dans une disposition telle que la distance entre deux paires voisines de pôles est au moins si grande qu'au moins un aimant permanent (7) entre les paires de pôles concernées n'est pas couvert par un pôle (1 ou 2, respectivement 23 ou 24).

FIG 1

FIG 2

FIG 3

FIG 4

FIG 5

FIG 6

FIG 7